# EUROPEAN PATENT APPLICATION

(11) **EP 2 947 860 A1**
(43) Date of publication of application: **25.11.2015**
(21) Application number: 13872075.0
(22) Date of filing: 18.11.2013
(51) Int. Cl.: H04M 1/725

(54) **OPERATION METHOD AND APPARATUS OF MOBILE TERMINAL**

(30) Priority: 18.01.2013 CN 201310018672
(71) Applicant: ZTE Corporation, Shenzhen, Guangdong 518057 (CN)
(72) Inventor: JIANG, Qiuhong, Shenzhen Guangdong 518057 (CN)
(74) Representative: Bongiovanni, Simone
(86) International application number: PCT/CN2013/087365
(87) International publication number: WO 2014/110937

(57) **Abstract**

Provided are an operation method and an apparatus of a mobile terminal. According to the operation method of the mobile terminal, it is determined that a display screen of a mobile terminal is in a damaged state; it is judged whether a preset key or key combination is triggered; in a case where a judging result is that the preset key or key combination is triggered, the mobile terminal is controlled to execute a preset operation corresponding to the preset key or key combination in the damaged state. The technical solution solves a problem in a related technology that the mobile terminal is difficult to operate in a case where the display screen is damaged, improves operability of the mobile terminal and expands an application scope of the mobile terminal.

## Description

### Technical Field

The present disclosure relates to the field of communications, in particular to an operation method and apparatus of a mobile terminal.

### Background

Hardware of a mobile terminal (for example, a mobile phone) usually includes a central processing unit (CPU), a memory, input/output devices (for example, a keyboard, a display screen, a USB, etc.), and further includes a radio frequency interface. The mobile terminal can communicate with a base station through an air interface protocol (for example, a GSM, CDMA, WCDMA, etc.), which not only can transmit voices, but also can transmit data, etc.

With the development of mobile communication technologies, at present, a mobile terminal (for example, a mobile phone) has evolved into an indispensable product in people's daily life, and is often carried around. Therefore, when a person encounters some unexpected events (for example, emergent and dangerous situations), a mobile terminal may server as an important resorting means. However, a display screen of the mobile terminal is usually a most vulnerable part, and is usually damaged first upon the occurrence of such events. However, after the display screen of the mobile terminal is damaged, other hardware of the mobile terminal still can work normally, that is, the mobile terminal can still be used as a device for emergent resorting at the moment.

However, because of the damage of the display screen of the mobile terminal, a user can hardly know the accuracy of an operation as well as whether the operation is successful, and especially for a touch screen type mobile terminal which is popular at present, most of the functions thereof all need to be realized depending on the operation on the display screen. Therefore, once the display screen is damaged, although most of other functions of the mobile terminal can still operate normally, the user can hardly realize the functions which should be realized.

At present, there is no effective solution for the problem that it is hard to operate in the case where a display screen of a mobile terminal is damaged in the related art.

### Summary

With regard to the problem that it is hard to operate in the case where a display screen of a mobile terminal is damaged in the related art, the present disclosure provides an operation method and apparatus of a mobile terminal to at least solve the above-mentioned problem.

According to one aspect of the embodiments of the present disclosure, an operation method of a mobile terminal is provided, including: determining that a display screen of a mobile terminal is in a damaged state; judging whether a preset key or key combination is triggered; in a case where a judgement result is that the preset key or key combination is triggered, controlling the mobile terminal to execute a preset operation corresponding to the preset key or key combination in the damaged state.

In an example embodiment, controlling the mobile terminal to execute the preset operation corresponding to the preset key or key combination in the damaged state includes at least one of the following: controlling the mobile terminal to play a pre-stored first audio; controlling a flashlight of the mobile terminal to emit an optical signal according to a preset time interval; controlling the mobile terminal to dial one or more pre-stored numbers according to a preset sequence; and controlling the mobile terminal to send a pre-stored short message to a preset number.

In an example embodiment, after controlling the mobile terminal to dial the one or more pre-stored numbers according to the pre-stored sequence, the method further includes: in a case where the dialling is carried out successfully, controlling the mobile terminal to play a pre-stored second audio.

In an example embodiment, after determining that the display screen of the mobile terminal is in the damaged state, the method further includes: detecting whether a communication function of the mobile terminal is available.

In an example embodiment, after detecting whether the communication function of the mobile terminal is available, the method further includes: in a case where it is detected that the communication function is available, starting an emergent indicator on the mobile terminal.

In an example embodiment, after controlling the mobile terminal to execute the preset operation corresponding to the key or key combination, the method further includes: judging whether the preset operation is successfully executed; and in a case where the preset operation is successfully executed, changing a display state of the emergent indicator.

In an example embodiment, the display state includes at least one of the following: a display colour, a display frequency and display strength.

According to another aspect of the embodiments of the present disclosure, an operation apparatus of a mobile terminal is provided, including: a determination module, configured to determine that a display screen of the mobile terminal is in a damaged state; a first judgement module, configured to judge whether a preset key or key combination is triggered; and a control module, configured to control, in a case where a judgement result of the first judgement module is that the preset key or key combination is triggered, the mobile terminal to execute a preset operation corresponding to the preset key or key combination in the damaged state.

In an example embodiment, the control module includes at least one of the following: a first control element, configured to control the mobile terminal to play a pre-stored first audio; a second control element, configured to control a flashlight of the mobile terminal to emit an optical signal according to a preset time interval; a third control element, configured to control the mobile terminal to dial one or more pre-stored numbers according to a pre-stored sequence; and a fourth control element, configured to control the mobile terminal to send a pre-stored short message to one or more pre-stored numbers.

In an example embodiment, the control module further includes: a fifth control module, configured to control the mobile terminal to play a pre-stored second audio in a case where the third control element dials successfully.

In an example embodiment, the apparatus further includes: a detection module, configured to detect whether a communication function of the mobile terminal is available, and start an emergent indicator on the mobile terminal in a case where it is detected that the communication function of the mobile terminal is available.

In an example embodiment, the apparatus further includes: a second judgement module, configured to judge whether the preset operation is successfully executed; and an adjustment module, configured to change a display state of the emergent indicator in a case where a judgement result of the second judgement module is that the preset operation is successfully executed.

Through the embodiments of the present disclosure, after it is determined that a display screen of a mobile terminal is in a damaged state, it is judged whether a preset key or key combination is triggered, in a case where a judgement result is that the preset key or key combination is triggered, the mobile terminal is controlled to execute a preset operation corresponding to the preset key or key combination in the damaged state. This technical solution solves the problem that it is hard to operate in the case where a display screen of a mobile terminal is damaged in the related art, improves the operability of the mobile terminal, and expands the applicability of the mobile terminal.

### Brief Description of the Drawings

Drawings, provided for further understanding of the disclosure and forming a part of the specification, are used to explain the disclosure together with embodiments of the disclosure rather than to limit the disclosure. In the drawings:
Fig. 1 is a flowchart of an operation method of a mobile terminal according to an embodiment of the present disclosure;
Fig. 2 is a structural block diagram of an operation apparatus of a mobile terminal according to an embodiment of the present disclosure;
Fig. 3 is an example structural block diagram of a control module according to an embodiment of the present disclosure;
Fig. 4 is an example structural block diagram 1 of an operation apparatus of a mobile terminal according to an embodiment of the present disclosure;
Fig. 5 is an example structural block diagram 2 of an operation apparatus of a mobile terminal according to an embodiment of the present disclosure;
Fig. 6 is a flowchart of realizing an emergent call for help method after a display screen of a mobile phone is damaged according to embodiment 1 of the present disclosure; and
Fig. 7 is a flowchart of realizing an emergent call for help method after a display screen of a mobile phone is damaged according to embodiment 2 of the present disclosure.

### Detailed Description of the Embodiments

The present disclosure is described below with reference to the accompanying drawings and embodiments in detail. Note that, the embodiments of the disclosure and the features of the embodiments can be combined with each other if there is no conflict.

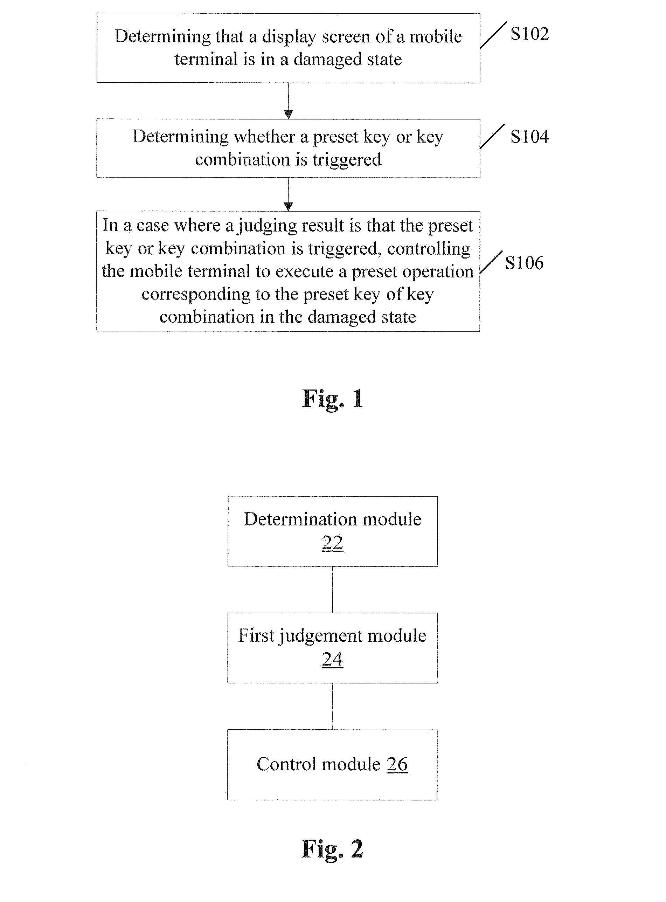

An operation method for a mobile terminal is provided in the present embodiment. Fig. 1 is a flowchart of an operation method of a mobile terminal according to an embodiment of the present disclosure. As shown in Fig. 1, the method includes the following steps:
step S102, it is determined that a display screen of a mobile terminal is in a damaged state;
step S104, it is judged whether a preset key or key combination is triggered; and
step S106, in a case where a judgement result is that the preset key or key combination is triggered, the mobile terminal is controlled to execute a preset operation corresponding to the preset key or key combination in the damaged state.

Through the above-mentioned steps in the present embodiment, whether a user triggers a preset key or key combination is judged in the case that a display screen of a mobile terminal is in a damaged state; and if the preset key or key combination is triggered, then a preset operation corresponding to the preset key or key combination in the damaged state is executed so that even if the display screen of the mobile terminal is damaged, the user are still enabled to realize preset operations based on the preset key or key combination. For example, some functions (dialling, sending a short message, application, etc.) which are hard to be realized in the case where the display screen is damaged are able to be performed, which solves the problem that it is hard to operate in the case where a display screen of a mobile terminal is damaged in the related art, improves the operability of the mobile terminal, and expands the applicability of the mobile terminal.

Considering that when a display screen of a mobile terminal is damaged, a user may be encountering a dangerous or emergent situation, therefore, as an example embodiment, the preset operation corresponding to the above-mentioned key or key combination in step S106 may be set to be the following operations. For example, a preset first audio may be played, wherein the first audio may be an alarm audio, such as a segment of recordings, or a segment of calling for help which attracts attention. As another example, a flashlight of the mobile terminal may be controlled to emit an optical signal according to a preset time interval, such as an SOS calling for help signal of three long and three short which are internationally used. As still another example, one or more pre-stored numbers may be dialled according to a preset sequence, for example, a first preset number may be dialled firstly, and if the dialling is failed, then a next emergent number is automatically dialled so as to continue dialling until the dialling is successful. As still another example, a pre-stored short message may be sent to one or more pre-stored numbers, for example, a pre-stored message for help, etc. may be sent in group to all numbers in a preset group. Of course, the preset operation corresponding to the above-mentioned key or key combination is not limited to the above-mentioned operations.

In an example embodiment, in the case where a preset operation corresponding to the above-mentioned key or key combination is to dial one or more pre-stored numbers according to a preset sequence, if the dialling is successful, the mobile terminal may play a pre-stored second audio, wherein the audio may be a pre-recorded segment of emergent call for help audio. After finishing playing, the mobile terminal may automatically hang up the conversation. In another example embodiment, a next pre-stored number may be further dialled according to the above-mentioned sequence.

In addition, although the preset function can be completed through the above-mentioned key or key combination in the case where a display screen is damaged, since the display screen is damaged, a user cannot learn whether the preset function is able to be realized. Considering that the communication function of the mobile terminal is the most important function in the case of emergency, and therefore, as an example embodiment, after determining that a display screen of the mobile terminal is in a damaged state, the mobile terminal may further detect whether a communication function of the mobile terminal is available, and the detection result may be indicated to a user.

In an example embodiment, after detecting whether a communication function of the mobile terminal is available, if the communication function is available, the user may be indicated through a manner of activating an emergent indicator on the mobile terminal. Through this manner, in the case where the display screen is damaged, the user observes that the emergent indicator is lightened, then it can be determined that the mobile terminal can still realize a communication function.

Moreover, because of the damage of the display screen, although most of functions have been realized, the user still cannot learn whether the function has been executed successfully. Therefore, in an example embodiment, after controlling the mobile terminal to execute a preset operation corresponding to a key or key combination, it is judged whether of the above-mentioned preset operation is executed successfully, and if the preset operation is executed successfully, then the user may be notified through a manner of changing the display state of the emergent indicator. For example, in the case where the dialling or sending a short message is carried out successfully, the mobile terminal may be controlled to change the display state of the emergent indicator, such as a display colour, a display frequency, display strength, etc.

Corresponding to the above-mentioned method, the present embodiment also provides an operation apparatus of a mobile terminal, and the apparatus is used for realizing the above-mentioned embodiments and example implementation, which has been described, thereby needing no further description. As used below, the term "module" is a combination of software and/or hardware capable of implementing predetermined functions. Although the apparatus described in the following embodiment may be preferably implemented by software, it would be conceived to implement hardware or a combination of software and hardware.

Fig. 2 is a structural block diagram of an operation apparatus of a mobile terminal according to an embodiment of the present disclosure. As shown in Fig. 2, the apparatus includes: a determination module **22**, a first judgement module **24** and a control module **26**. The above modules are described below in detail.

The determination module **22**, configured to determine that a display screen of the mobile terminal is in a damaged state. The first judgement module **24** is coupled with the determination module **22** and configured to judge whether a preset key or key combination is triggered. The control module **26** is coupled with the first judgement module **24** and configured to control, in a case where a judgement result of the first judgement module **24** is that the preset key or key combination is triggered, the mobile terminal to execute a preset operation corresponding to the preset key or key combination in the damaged state.

Through the above-mentioned modules, in the present embodiment, the first judgement module **24** judges whether a user triggers a preset key or key combination in the case where the determination module **22** determines that a display screen of a mobile terminal is in a damaged state, and if the preset key or key combination is triggered, the control module **26** executes the preset operation corresponding to the key or key combination in the above-mentioned damaged state. In this way, even if the display screen of the mobile terminal is damaged, the user are still enabled to realize preset operations based on the preset key or key combination. For example, some functions (dialling, sending a short message, application, etc.) which are hard to be realized in the case of the display screen being damaged are able to be performed, which solves the problem that it is hard to operate in the case where a display screen of a mobile terminal is damaged in the related art, improves the operability of the mobile terminal, and expands the applicability of the mobile terminal.

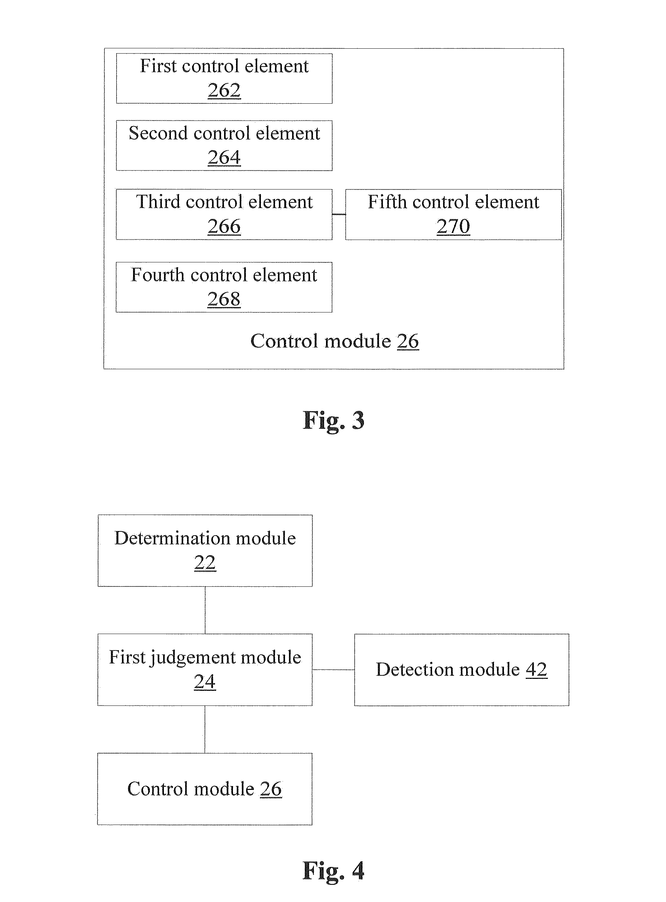

Fig. 3 is an example structural block diagram of the control module **26** according to an embodiment of the present disclosure. As shown in Fig. 3, the control module **26** may include at least one of the following: a first control element **262**, configured to control the mobile terminal to play a pre-stored first audio; a second control element **264**, configured to control a flashlight of the mobile terminal to emit an optical signal according to a preset time interval; a third control element **266**, configured to control the mobile terminal to dial one or more pre-stored numbers according to a pre-stored sequence; and a fourth control element **268**, configured to control the mobile terminal to send a pre-stored short message to one or more pre-stored numbers. In an example embodiment, the control module **26** may further include: a fifth control module **270**, coupled with the third control element **266** and configured to control the mobile terminal to play a pre-stored second audio in the case where the third control element **266** dials successfully.

Fig. 4 is an example structural block diagram 1 of an operation apparatus of a mobile terminal according to an embodiment of the present disclosure. As shown in Fig. 4, the apparatus may further include: a detection module **42**, coupled with a first judgement module **24** and configured to detect whether a communication function of the mobile terminal is available, and start an emergent indicator on the mobile terminal in a case where it is detected that the communication function of the mobile terminal is available.

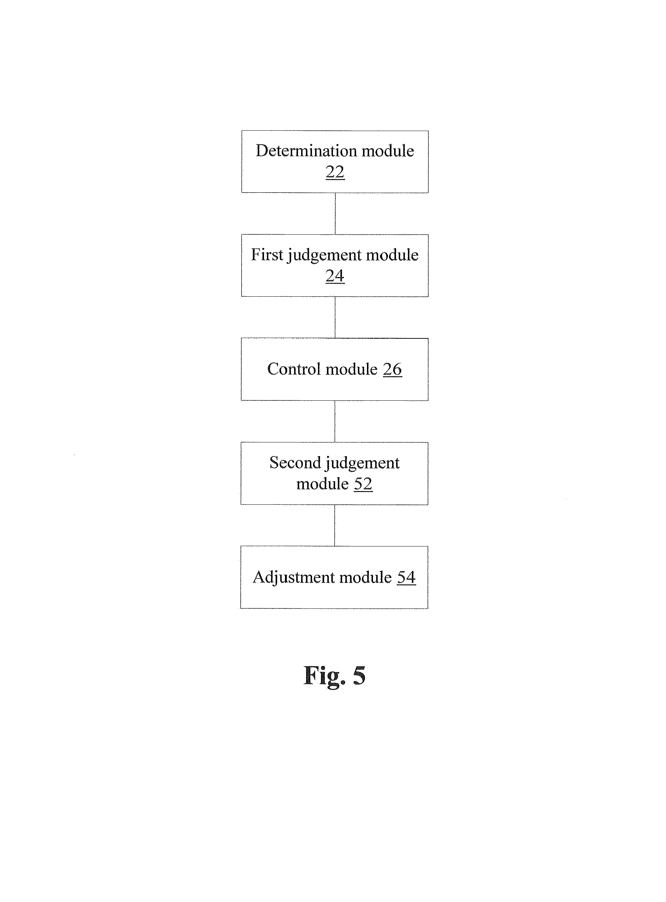

Fig. 5 is an example structural block diagram 2 of an operation apparatus of a mobile terminal according to an embodiment of the present disclosure. As shown in Fig. 5, the apparatus may also include: a second judgement module **52**, coupled with the control module **26** and configured to judge whether the preset operation is executed successfully; and an adjustment module **54**, coupled with the second judgement module **52** and configured to change a display state of an emergent indicator in the case where a judgement result of the second judgement module **52** is that the preset operation is successfully executed.

The disclosure is described with reference to example embodiments below, and the following example embodiments may combine the above-mentioned embodiments and the example implementation thereof.

The following example embodiments are illustrated by taking a mobile phone realizing emergent call for help function as an example. An emergent call for help method after a display screen of a mobile phone is damaged is provided. The method can realize emergent call for help in the case where a display screen of the mobile phone is damaged. In addition, the method can be realized by the mobile phone itself which greatly improves the probability of being rescued. The method is simple, has low cost, is applicable to multiple situations and is very practical.

The example embodiment uses the following two implementation manners. Manner 1 of realizing an emergent call for help method after a display screen of a mobile phone is damaged includes the following steps:
step S2, it is detected that the display screen of the mobile phone is damaged, and other basic hardware components operates normally (for example, a communication function is normal), and an emergent indicator is lightened;
step S4, a user presses a combination keys, and the mobile phone begins to perform the following operations;
step S6, the mobile phone dials an emergent number;
step S8, after the call to this emergent number is answered, the mobile phone automatically plays a segment of emergent call for help audio preset in a memory to an opposite side;
step S10, after playing the audio, the call is automatically hung up;
step S12, if the call to this emergent number cannot be answered, the next emergent number is automatically dialled; and
step S14, after successful call for help, the colour of an emergent indicator of the mobile phone changes.

Manner 2 of realizing an emergent call for help method after a display screen of a mobile phone is damaged includes the following steps:
step S22, it is detected that the display screen of the mobile phone is damaged, and other basic hardware components operates normally, and an emergent indicator is lightened;
step S24, the user presses combination keys, and the mobile phone begins to perform the following operations;
step S26, the mobile phone sends a call for help short message which is preset in a memory to all emergent numbers; and
step S28, after successful sending, the colour of an emergent indicator of the mobile phone changes.

The above-mentioned emergent situation is that the display screen of a mobile phone is damaged and other basic hardware components are able to operate normally.

In an example embodiment, the above-mentioned combination keys may be any two, three or more keys of the mobile phone which are pressed at the same time.

In an example embodiment, the above-mentioned preset emergent numbers are preset in the memory of the mobile phone, wherein the numbers may be 110, 112 and 119, and may also be numbers self-defined by a user. After pressing the combination keys, automatic dialling may be performed or a message is sent to the emergent numbers. The above-mentioned emergent numbers are not unique, and the amount thereof may be determined according to the memory of the mobile phone.

In an example embodiment, the above-mentioned emergent indicator may be used for indicating that other components of the mobile phone except the display screen work normally. After the calling for help is successful, the emergent indicator indicates the success in the calling for help.

The example embodiment has the following advantages:
1. the method operates simply, and has a good promotional prospect;
2. the method fully considers call for help means which can be used by a user in emergent situations after the display screen of the mobile phone is damaged; and
3. the method fully uses existing components of the mobile phone for completion without adding any cost.

In summary, the method uses the mobile phone to complete the emergent calling for help in the case where the display screen thereof is damaged, which does not add any cost and the operation is simple, and has a good promotional prospect.

### Embodiment 1

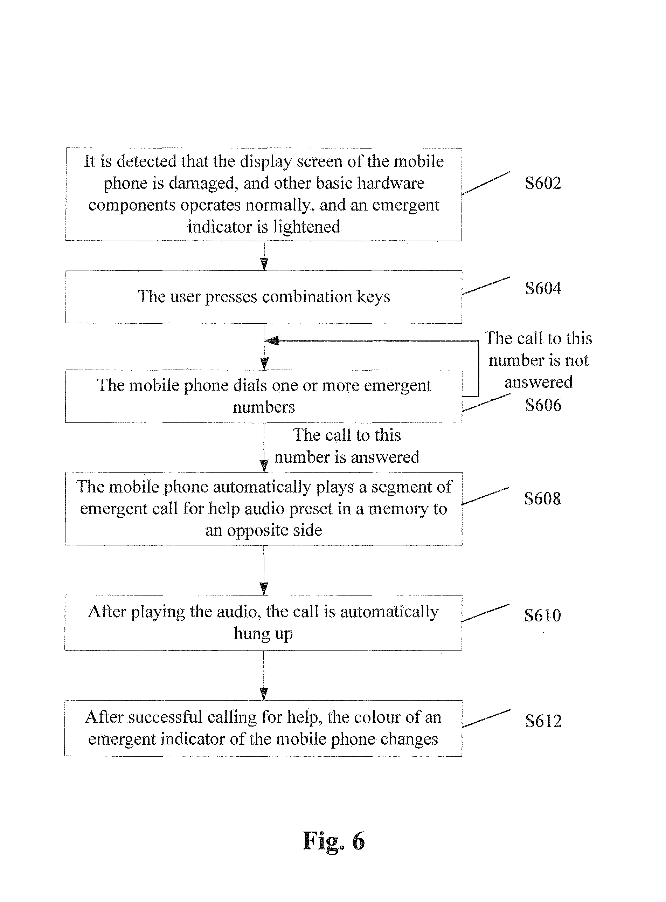

Fig. 6 is a flowchart of realizing an emergent call for help method after the display screen of a mobile phone is damaged according to embodiment 1 of the present disclosure. As shown in Fig. 6, the emergent call for help method includes the following steps:
step S602, it is detected that the display screen of the mobile phone is damaged, and other basic hardware components operates normally, and an emergent indicator is lightened;
step S604, the user presses combination keys, and the mobile phone begins to perform the following operations;
step S606, the mobile phone dials an emergent number; if the call to this number cannot be answered, then a next emergent number is automatically dialled; and if the call to this number is answered, then step S608 is entered;
step S608, the mobile phone automatically plays a segment of emergent call for help audio preset in a memory to an opposite side;
step S610, after playing the audio, the call is automatically hung up; and
step S612, after successful calling for help, the colour of an emergent indicator of the mobile phone changes.

The above-mentioned emergent situation may be that the display screen of a mobile phone is damaged and other basic hardware components operates normally.

The above-mentioned combination keys may be any two, three or more keys of the mobile phone which are pressed at the same time.

The above-mentioned preset emergent numbers may be preset in the memory of the mobile phone, wherein the numbers may be 110, 112 and 119, and may also be numbers self-defined by a user. After pressing the combination keys, automatic dialling may be performed or a message is sent to the emergent numbers, wherein the above-mentioned emergent numbers are not unique, and the amount thereof may be determined according to the memory of the mobile phone.

The above-mentioned emergent indicator may indicate that other components of the mobile phone except the display screen work normally, and may also indicate the success in the calling for help after calling for help is successful.

### Embodiment 2

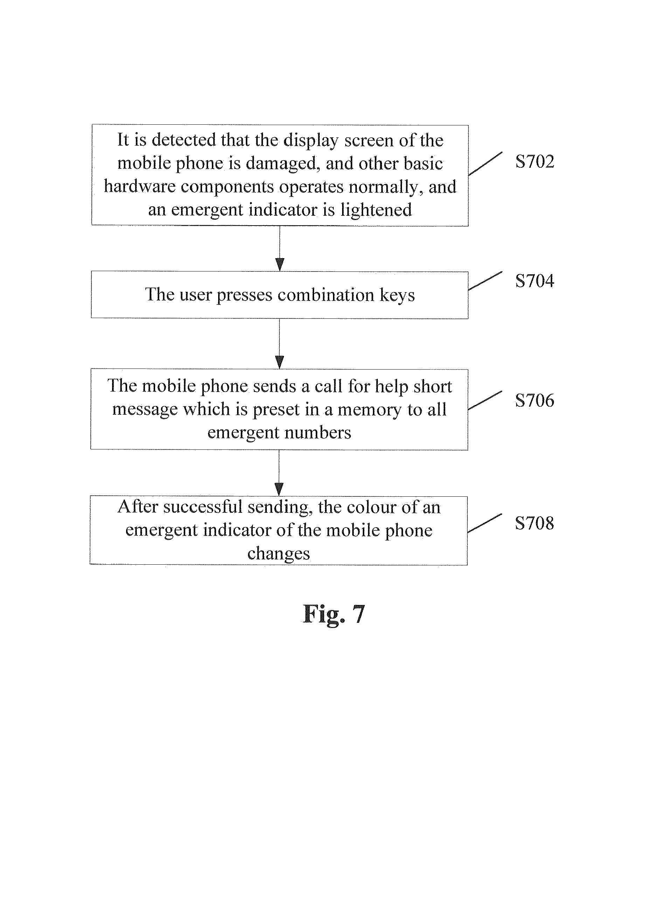

Fig. 7 is a flowchart of realizing an emergent call for help method after the display screen of a mobile phone is damaged according to embodiment 2 of the present disclosure. As shown in Fig. 7, the emergent call for help method includes the following steps:
step S702, it is detected that the display screen of the mobile phone is damaged, and other basic hardware components operates normally, and an emergent indicator is lightened;
step S704, the user presses combination keys, and the mobile phone begins to perform the following operations;
step S706, the mobile phone sends a call for help short message which is preset in a memory to all emergent numbers; and
and step S708, after successful sending, the colour of an emergent indicator of the mobile phone changes.

The above-mentioned emergent situation may be that the display screen of a mobile phone is damaged and other basic hardware components operates normally.

The above-mentioned combination keys may be any two, three or more keys of the mobile phone which are pressed at the same time.

The above-mentioned preset emergent numbers may be preset in the memory of the mobile phone, wherein the numbers may be 110, 112 and 119, and may also be numbers self-defined by a user. After pressing the combination keys, automatic dialling may be performed or a message is sent to the emergent numbers. The above-mentioned emergent numbers are not unique, and the amount thereof may be determined according to the memory of the mobile phone.

The above-mentioned emergent indicator may indicate that other components of the mobile phone except the display screen work normally. After the calling for help is successful, the emergent indicator may also indicate the success in the calling for help.

In another embodiment, software is further provided, and the software is used for performing the technical solutions described in the above-mentioned embodiments and in the example implementation.

In another embodiment, a storage medium is further provided, the above-mentioned software is stored in the storage medium, and the storage medium includes but not limited to optical disks, floppy disks, hard disks, removable storages, etc.

Obviously, those skilled in the art should know that each of the mentioned modules or steps of the disclosure can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present disclosure is not restricted to any particular hardware and software combination.

### Industrial Applicability

Through the embodiments of the present disclosure, by determining that a display screen of a mobile terminal is in a damaged state; determining whether a preset key or key combination is triggered; in a case where a judgement result is that the preset key or key combination is triggered, controlling the mobile terminal to execute a preset operation corresponding to the preset key or key combination in the damaged state, it solves the problem that it is hard to operate in the case where a display screen of a mobile terminal is damaged in the related art, improves the operability of the mobile terminal, and expands the applicability of the mobile terminal.

The descriptions above are only the preferable embodiment of the disclosure, which are not used to restrict the disclosure, for those skilled in the art, the disclosure may have various changes and variations. Any amendments, equivalent substitutions, improvements, etc. within the principle of the disclosure are all included in the scope of the protection defined by the appended claims of the disclosure.

## Claims

1. An operation method of a mobile terminal, **characterized by** comprising:
determining that a display screen of the mobile terminal is in a damaged state;
judging whether a preset key or key combination is triggered; and
in a case where a judgement result is that the preset key or key combination is triggered, controlling the mobile terminal to execute a preset operation corresponding to the preset key or key combination in the damaged state.

2. The method according to claim 1, **characterized in that** controlling the mobile terminal to execute the preset operation corresponding to the preset key or key combination in the damaged state comprises at least one of the following:
controlling the mobile terminal to play a pre-stored first audio;
controlling a flashlight of the mobile terminal to emit an optical signal according to a preset time interval;
controlling the mobile terminal to dial one or more pre-stored numbers according to a pre-stored sequence; and
controlling the mobile terminal to send a pre-stored short message to one or more pre-stored numbers.

3. The method according to claim 2, **characterized in that** after controlling the mobile terminal to dial one or more pre-stored numbers according to the pre-stored sequence, the method further comprises:
in a case where the dialling is carried out successfully, controlling the mobile terminal to play a pre-stored second audio.

4. The method according to any one of claims 1 to 3, **characterized in that** after determining that the display screen of the mobile terminal is in the damaged state, the method further comprises:
detecting whether a communication function of the mobile terminal is available.

5. The method according to claim 4, **characterized in that** after detecting whether the communication function of the mobile terminal is available, the method further comprises:
in a case where it is detected that the communication function is available, starting an emergent indicator on the mobile terminal.

6. The method according to claim 5, **characterized in that** after controlling the mobile terminal to execute the preset operation corresponding to the preset key or key combination, the method further comprises:
judging whether the preset operation is successfully executed; and
in a case where the preset operation is successfully executed, changing a display state of the emergent indicator.

7. The method according to claim 6, **characterized in that** the display state comprises at least one of the following:
a display colour, a display frequency and display strength.

8. An operation apparatus of a mobile terminal, **characterized by** comprising:
a determination module, configured to determine that a display screen of the mobile terminal is in a damaged state;
a first judgement module, configured to judge whether a preset key or key combination is triggered; and
a control module, configured to control, in a case where a judgement result of the first judgement module is that the preset key or key combination is triggered, the mobile terminal to execute a preset operation corresponding to the preset key or key combination in the damaged state.

9. The apparatus according to claim 8, **characterized in that** the control module comprises at least one of the following:
a first control element, configured to control the mobile terminal to play a pre-stored first audio;
a second control element, configured to control a flashlight of the mobile terminal to emit an optical signal according to a preset time interval;
a third control element, configured to control the mobile terminal to dial one or more pre-stored numbers according to a pre-stored sequence; and
a fourth control element, configured to control the mobile terminal to send a pre-stored short message to one or more pre-stored numbers.

10. The apparatus according to claim 9, **characterized in that** the control module further comprises:
a fifth control module, configured to control the mobile terminal to play a pre-stored second audio in a case where the third control element dials successfully.

11. The apparatus according to any one of claims 8 to 10, **characterized in that** the apparatus further comprises:
a detection module, configured to detect whether a communication function of the mobile terminal is available, and start an emergent indicator on the mobile terminal in a case where it is detected that the communication function of the mobile terminal is available.

12. The apparatus according to claim 11, **characterized in that** the apparatus further comprises:
a second judgement module, configured to judge whether the preset operation is successfully executed; and
an adjustment module, configured to change a display state of the emergent indicator in a case where a judgement result of the second judgement module is that the preset operation is successfully executed.
